# EUROPEAN PATENT SPECIFICATION

(11) **EP 2 785 041 B1**
(45) Date of publication and mention of the grant of the patent: **15.08.2018**
(21) Application number: 13190982.2
(22) Date of filing: 31.10.2013
(51) Int. Cl.: H04N 1/60

(54) **Image processing apparatus, image forming apparatus, image processing method, and program**
Bildverarbeitungsvorrichtung, Bilderzeugungsvorrichtung, Bildverarbeitungsverfahren und Programm
Appareil de traitement d'images, appareil de formation d'images, procédé de traitement d'images et programme

(30) Priority: 25.03.2013 JP 2013062086
(43) Date of publication of application: 01.10.2014
(73) Proprietor: FUJI XEROX CO., LTD, Minato-ku Tokyo (JP)
(72) Inventor: Kawano, Hiroyuki, Ashigarakami-gun, Kanagawa (JP); Kouno, Katsuyuki, Ashigarakami-gun, Kanagawa (JP); Kikuchi, Michio, Ashigarakami-gun, Kanagawa (JP); Nagao, Kagenori, Ashigarakami-gun, Kanagawa (JP); Miyazawa, Natsumi, Ashigarakami-gun, Kanagawa (JP)
(74) Representative: Haseltine Lake LLP

(56) References cited:
- EP-A1- 1 739 956
- EP-A2- 2 202 584
- US-A- 5 760 913
- US-A1- 2011 032 380

## Description

### BACKGROUND

### 1. Technical field

The present invention relates to an image processing apparatus, an image forming apparatus, an image processing method, and a program.

### 2. Related Art

The image recording apparatus disclosed in Patent Literature 1 (JP-A-2009-126058) records an image on a recording medium based on printing reference data, acquires inspection image data by capturing the image by an image acquisition unit, and acquires a color correction coefficient and a filter coefficient based on the printing reference data and the inspection image data. The color correction coefficient and the filter coefficient are values corresponding to spatial frequency properties of an optical system of the image acquisition unit, or spatial frequency properties of the inspection image data that varies according to the type of recording medium or properties of ink. The image recording apparatus corrects the printing reference data based on the color correction coefficient and the filter coefficient, and inspects the image by comparing the corrected printing reference data and the inspection image data with each other.

The image forming apparatus disclosed in Patent Literature 2 (JP-A-2007-30302) prints an image based on image data of a uniform density, reads the image to specify a non-uniform region, and prepares test image data in which a color sample is arranged to avoid the non-uniform region.

EP 2202584 discloses a printer gradation correction method and a color patch image used for the correction.

### SUMMARY

An object of the present invention is to reduce an effect of a defect of an image on a color conversion parameter.
[1] According to an aspect of the invention, an image processing apparatus includes: a color converting unit that performs color conversion on color sample data which represents color sample images using color conversion parameters to generate first raster data; an acquiring unit that acquires second raster data generated by reading the color sample images formed based on first color sample images of the first raster data by an image forming apparatus; a detecting unit that detects a defect present in second color sample images of the second raster data; and a correcting unit that excludes image data of a region where the defect is detected by the detecting unit from the second color sample images, and corrects the color conversion parameters such that a color of each second color sample image formed based on the first raster data by the image forming apparatus comes close to a color corresponding to the first color sample image of the first raster data, based on the second raster data corresponding to a region excluding the region where the defect is detected by the detecting unit, and the first raster data. The correcting unit does not execute the correction of the color conversion parameters based on the second raster data when, in relation to an area of the second color sample image of the second raster data, a ratio of a total area of the regions where the defects are present in the second color sample image of the second raster data reaches a threshold.
[2] The image processing apparatus of [1], may have a configuration in which the detection of the detecting unit is performed by comparing the first color sample images of the first raster data and the second color sample images of the second raster data.
[3] The image processing apparatus of [1], may further include: a storage unit in which the second raster data acquired by the acquiring unit as reference raster data is stored, in which the detection of the detecting unit is performed by comparing color sample images of the reference raster data and the second color sample images of the second raster data which is acquired after the storage of the reference raster data.
[4] The image processing apparatus of [1] or [2], may a configuration in which the region where the region where the defect is detected by the detecting unit includes a region of the defect and a region adjacent thereto.
[5] The image processing apparatus of [1], may have a configuration in which the correcting unit notifies occurrence of error when, the ratio of the total area reaches the threshold.
[6] The image processing apparatus of any one of [1] to [5], may further include: a receiving unit that receives designation of a certain region of the second color sample images of the second raster data by a user, in which the correcting unit excludes the image data of the region which is within the certain region of which the designation is received by the receiving unit.
[7] According to an aspect of the invention, an image forming apparatus includes: the image forming unit; and the image processing apparatus of any one of [1] to [6].
[8] According to an aspect of the invention, an image processing method includes: performing color conversion on color sample data which represents color sample images using color conversion parameters to generate first raster data; acquiring second raster data generated by reading the color sample images formed based on first color sample images of the first raster data by an image forming apparatus; detecting a defect present in second color sample images of the second raster data; and excluding image data of a region where the defect is detected from the second color sample images, and correcting the color conversion parameters such that a color of each second color sample image formed based on the first raster data by the image forming apparatus comes close to a color corresponding to the first color sample image of the first raster data, based on the second raster data corresponding to a region excluding the region where the defect is detected, and the first raster data; wherein the correction of the color conversion parameters based on the second raster data is not executed when, in relation to an area of the second color sample image of the second raster data, a ratio of a total area of the regions where the defects are present in the second color sample image of the second raster data reaches a threshold.
[9] According to an aspect of the invention, a program causes a computer to execute a process for image processing, the process including: performing color conversion on color sample data which represents color sample images using color conversion parameters to generate first raster data; acquiring second raster data generated by reading the color sample images formed based on first color sample images of the first raster data by an image forming apparatus; detecting a defect present in second color sample images of the second raster data; and excluding image data of a region where the defect is detected from the second color sample images, and correcting the color conversion parameters such that a color of each second color sample image formed based on the first raster data by the image forming apparatus comes close to a color corresponding to the first color sample image of the first raster data, based on the second raster data corresponding to a region excluding the region where the defect is detected, and the first raster data; wherein the correction of the color conversion parameters based on the second raster data is not executed when, in relation to an area of the second color sample image of the second raster data, a ratio of a total area of the regions where the defects are present in the second color sample image of the second raster data reaches a threshold.

With any one of the configurations of [1], [2], [3], [7], [8] and [9], the effect of image defects on color conversion parameters may be reduced as compared to the case in which the correction unit is not provided.

With the configuration of [4], the effect of image defects on the color conversion parameters may be reduced as compared to the case in which color conversion parameters are corrected based on second raster data corresponding to the region where only a detected defect is excluded.

With the configuration of [1], the deterioration in the accuracy of color conversion parameters due to shortage of pixels may be suppressed as compared to the case in which the present configuration is not provided.

With the configuration of [5], a user may be informed that correction of color conversion parameters has not been performed.

With the configuration of [6], a user may be allowed to designate the certain region to be used for correction of color conversion parameters.

### BRIEF DESCRIPTION OF THE DRAWINGS

FIG. 1 is a view illustrating a configuration of hardware of an image forming apparatus 100.
FIG. 2 is a view illustrating a functional configuration of the image forming apparatus 100.
FIG. 3 is a view illustrating an image represented by color sample data.
FIGS. 4A to 4C are views illustrating divided color sample images, respectively.
FIG. 5 is a view illustrating a correction sequence of color conversion parameters.
FIG. 6 is a view illustrating an image processing apparatus 300.

### DETAILED DESCRIPTION

### <Hardware Configuration>

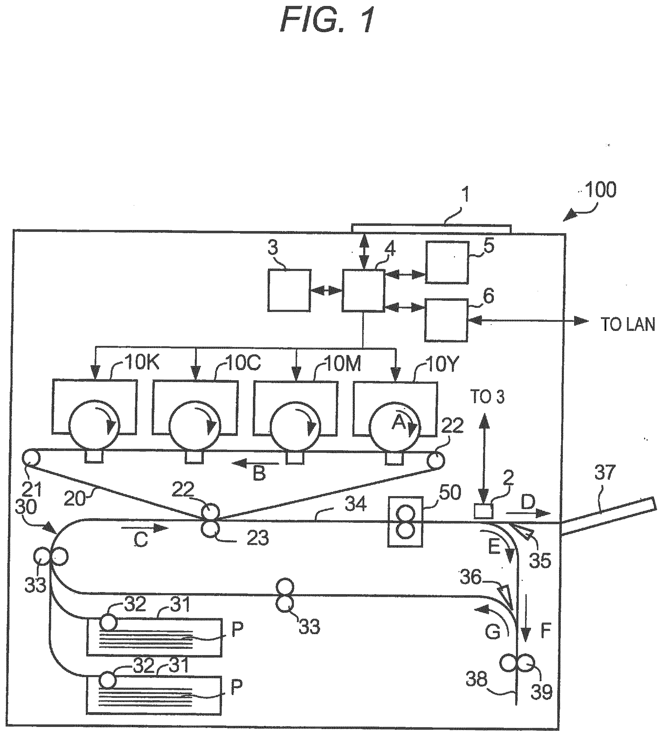

FIG. 1 is a view illustrating a configuration of hardware of an image forming apparatus 100.

The control unit 4 includes a central processing unit (CPU) that serves as a calculator and a read only memory (ROM) and a random access memory (RAM) that serve as memories (none of which is illustrated). Firmware that describes the starting sequence of hardware or an operating system (OS) is stored in the ROM. The RAM is used for storage of data when the CPU executes calculation.

The storage unit 5 is, for example, a hard disk memory device in which, for example, an OS and an application program are stored. The control unit 4 controls respective components of the image forming apparatus 100 by executing the OS and an application.

The communication unit 6 is a communication interface (I/F) connected to, for example, a local area network (LAN) (not illustrated) and intermediates communication between the image forming apparatus 100 and other apparatuses.

The manipulation unit 1 includes, for example, a touch-panel or a keypad, and receives a user's manipulation to output a signal corresponding to the user's manipulation to the control unit 4.

The conveyance section 30 conveys recording mediums P along a conveyance path 34. Specifically, in the medium accommodation units 31, sheet type recording mediums P, for example, papers are accommodated and stacked one above another. When a pickup roller 32 is rotated, the recording mediums P are sent out to the conveyance path 34 one by one. When conveyance rollers 33 installed on the conveyance path 34 are rotationally driven, the recording mediums P are conveyed in a direction illustrated by arrow C along the conveyance path 34.

The image processing unit 3 performs an image processing on input data. Specifically, the image forming apparatus 100 receives input data from an external information processing apparatus through a communication unit. The input data is described with, for example, a page description language and image colors are represented by, for example, gradation values of R (Red) color, G (Green) color and B (Blue) color. The image processing unit 3 performs image processings such as rasterization, noise removal, gamma correction, and screen processing on the input data and at the same time, performs color space conversion to convert the input data into raster data representing Y (Yellow) color, M (Magenta) color, C (Cyan) color, and K (Black) color. The image processing unit 3 supplies the raster data to image forming units 10Y, 10M, 10C, 10K.

The image forming units 10Y, 10M, 10C, 10K form toner images of Y, M, C, and K by an electro-photographic method based on the raster data supplied from the image processing unit 3. An intermediate transfer body 20 is an endless belt stretched over and wound on, for example, a drive roller 21 and rollers 22 to circulate in a direction illustrated by arrow B. The image forming units 10Y, 10M, 10C, 10K transfer the toner images to the intermediate transfer body 20 such that the toner images overlap. A transfer roller 23 transfers the toner images on the intermediate transfer body 20 to a recording medium P by electrostatic attraction. A fixing unit 50 fixes the toner images to the recording medium P by applying heat or pressure thereto. Hereinafter, the image forming units 10Y, 10M, 10C, 10K will be generally referred to as an image forming unit 10 when differentiation therebetween is unnecessary.

A reading unit 2 optically reads out the toner images fixed to the recording medium P to generate image data. Specifically, the reading unit 2 is installed so as to face the toner images on the recording medium P at the downstream side of the fixing unit 50. The reading unit 2 includes a light source, an optical system, and an image capturing device (none of which is illustrated). The light source emits light to the recording medium P and the reflected light is incident on the image capturing device through the optical system. The image capturing device converts the incident reflected light into a signal and transmits the signal to the image processing unit 3. The reading unit 2 may be any type of, for example, a spectrophotometer, a reflection densitometer, a reduction optical system, and a CIS (Contact Image Sensor).

### <Functional Configuration>

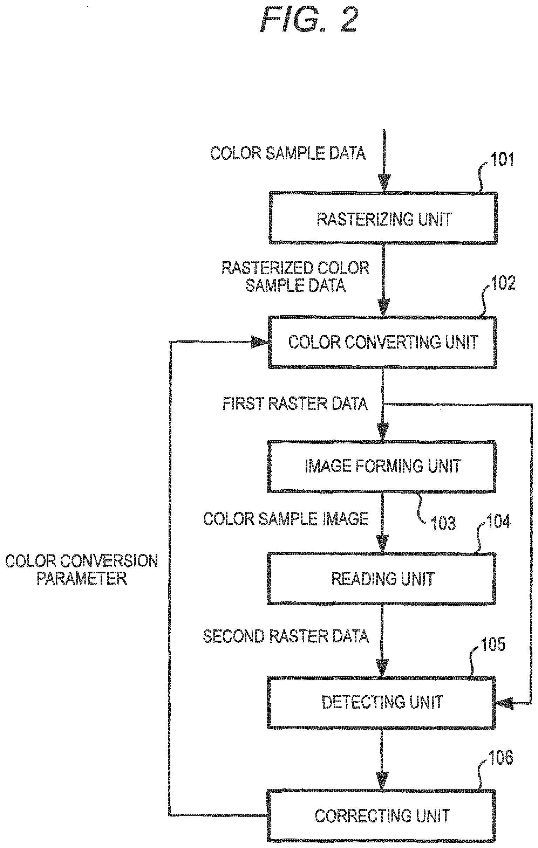

FIG. 2 is a view illustrating a functional configuration of the image forming apparatus 100. The following functions are implemented when the control unit 4 operates the hardware of the image forming apparatus 100 according to the OS and an application program.

First, a rasterizing unit 101 will be described. The rasterizing unit 101 performs rasterization of color sample data that represents color sample images. A detailed description is as follows.

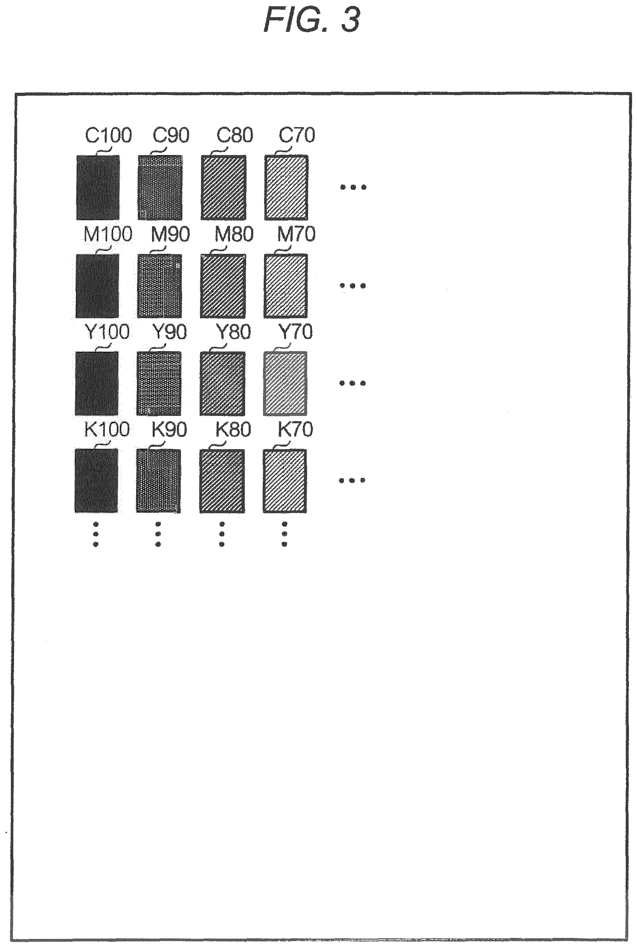

FIG. 3 is a view illustrating an image represented by color sample data. Color sample data is vector data that represents an image in which a plurality of color samples are regularly arranged. In the drawing, symbols appended to respective color samples denote a color and an area rate. That is, color samples of C, M, Y and K are sequentially arranged downwards from the uppermost tier and this arrangement is repeated plural times from the fifth tier. In each tier, the left end color sample has an area rate of 100% and area rates of the other color samples are reduced by a pitch of 10% sequentially towards the right. The color sample data is stored in the storage unit 5 and the image processing unit 3 converts the color sample data read out from the storage unit 5 into raster data having a predetermined resolution.

Next, a color converting unit 102 will be described. The color converting unit 102 performs color conversion on the color sample data rasterized by the rasterizing unit 101 using color conversion parameters to generate first raster data. A detailed description is as follows.

As described above, the image processing unit 3 performs color space conversion from RGB to YMCK. Here, the color of the image formed by the image forming unit 10 may be different from a color designated based on input data. To eliminate this color difference, the image processing unit 3 performs color conversion on raster data. For example, when raster data of an area rate of 90% is input to the image forming unit 10, an area rate of halftone cells in the raster data is increased such that an area rate of the image formed in the image forming unit 10 comes close to 90% if an area rate of image actually formed in the image forming unit 10 is 88%. A method of increasing the area may be a coefficient multiplication or an increment addition. In this example, a coefficient for multiplication is 90÷88=1.02 and an increment for addition is 90-88=2. The coefficient or increment is referred to as a color conversion parameter.

Color conversion parameters are previously acquired via experimentation or calculation with respect to various combinations of YMCK and area rates having a pitch of 10% and a lookup table (hereinafter referred to as LUT) in which the colors and the area rates correspond to the color conversion parameters is stored in the storage unit 5. Once raster data is generated from vector data, the image processing unit 3 performs color conversion on the raster data using the color conversion parameters to transmit the resulting data to the image forming unit 10. The raster data generated by performing color conversion on color sample data is referred to as first raster data. The image processing unit 3 transmits the first raster data to the image forming unit 10 and simultaneously stores copy of the first raster data in the storage unit 5.

Next, an image forming unit 103 will be described. The image forming unit 103 forms color sample images based on the first raster data. More specifically, the image forming unit 10 forms the color sample images based on the first raster data transmitted from the image processing unit 3 and transfers the color sample images to the intermediate transfer body 20. The transferred color sample images are transferred to the recording medium P that is conveyed along the conveyance path 34 and fixed on the recording medium P by the fixing unit 50.

Subsequently, a reading unit 104 will be described. The reading unit 104 reads out the color sample images formed by the image forming unit 103 to generate second raster data. More specifically, the reading unit 2 reads out the color sample images on the recording medium P and outputs a signal indicating the read-out color sample images to the image processing unit 3. The image processing unit 3 generates second raster data having the same resolution as that of the first raster data based on the signal received from the reading unit 2 to store the second raster data in the storage unit 5. In the following description, images depicted by the first raster data and the second raster data are referred to as first color sample images and second color sample images, respectively.

Next, a detecting unit 105 will be described. The detecting unit 105 detects a defect present in the second color sample images of the second raster data. The details are as follows.

A processing by the detecting unit 105 is performed for each color sample. The image processing unit 3 calculates an absolute value of difference (hereinafter referred to as an difference absolute value) between gradation values of each pixel included in the first color sample image and each pixel included in the second color sample image for each color sample. For example, when the gradation values are 2 gradations of 0 and 1, the difference absolute value is 0 or 1. Then, the image processing unit 3 divides each of the first color sample image and the second color sample image into a plurality of sub-regions for each color sample and calculates the total difference absolute value (hereinafter referred to as the sum of difference absolute values) for each sub-region. The image processing unit 3 compares the sum of difference absolute values with a predetermined threshold and determines that the corresponding sub-region has a defect if the sum of difference absolute values reaches the threshold.

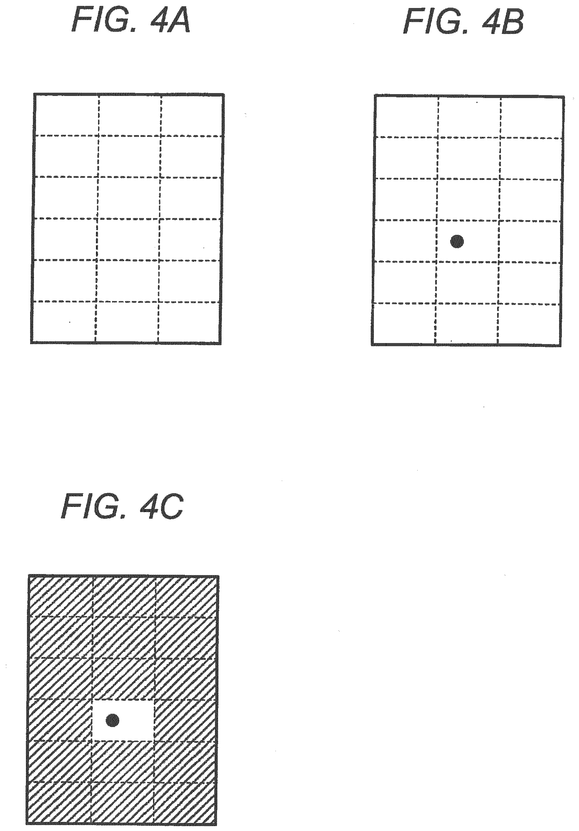

FIGS. 4A to 4C are views illustrating divided color sample images, respectively. A rectangular region surrounded by a solid line is a color sample and each rectangular region defined by dotted lines is a sub-region. FIG. 4A illustrates the first color sample image and FIG. 4B illustrates the second color sample image. This is an example in which a center sub-region of the fourth tier from the top of the second color sample image has a spot-shaped defect.

Next, a correcting unit 106 will be described. The correcting unit 106 excludes image data of a region where the defect is detected by the detecting unit 105 from the second color sample images, and corrects the color conversion parameters such that a color of each color sample image formed based on the first raster data by the image forming unit 103 comes close to a color corresponding to the first color sample image of the first raster data, based on the second raster data corresponding to a region excluding the region where the defect is detected by the detecting unit 105, and the first raster data. The region where the defect is detected by the detecting unit 105 includes a region of the defect and a region adjacent thereto. The details are as follows.

A processing by the correcting unit 106 is performed for each color sample. The image processing unit 3 calculates an average value of gradation values of all pixels included in the first color sample image (hereinafter, referred to as a first average value) for each color sample. In addition, the image processing unit 3 excludes graduation values of pixels included in a sub-region where the defect is detected by the detecting unit 105. The image processing unit 3 calculates an average value of gradation values of all pixels included in a region excluding the sub-region where the defect is detected by the detecting unit 105, that is, the region depicted with diagonal lines in FIG. 4C (hereinafter, referred to as a second average value) for each color sample. Then, the image processing unit 3 corrects color conversion parameters for each color sample such that the second average value is close to the first average value.

### <Operation>

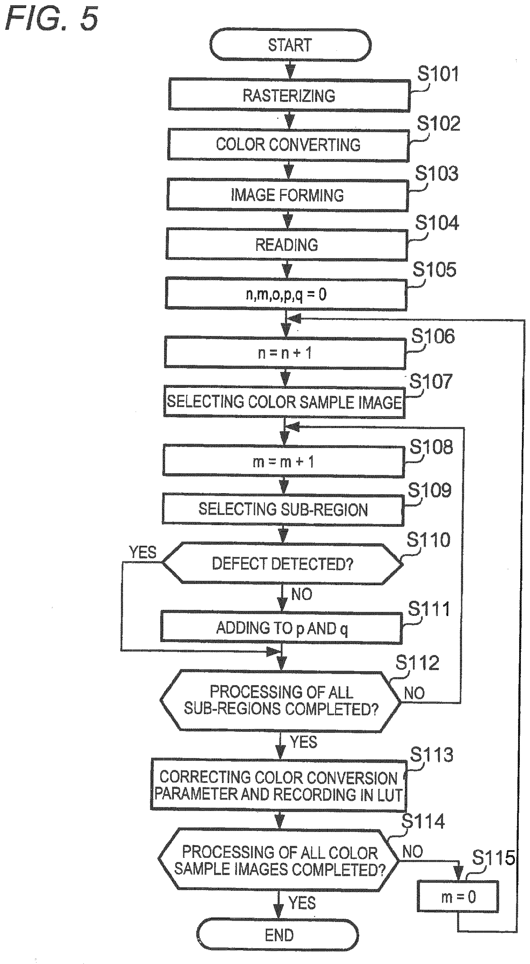

FIG. 5 is a view illustrating a correction sequence of color conversion parameters. A trigger to execute the correction of color conversion parameters may be set in any way. For example, the correction of color conversion parameters may be executed whenever power is supplied to the image forming apparatus 100, may be periodically executed, or may be executed whenever image formation is performed on a predetermined number of pages. Alternatively, the correction of color conversion parameters may be executed when the number of defects detected by the detecting unit 105 reaches a threshold or may be executed when the detection frequency of defects reaches a threshold. Alternatively, the correction of color conversion parameters may be executed when a user determines that the correction of color conversion parameters is necessary and gives an instruction to the image forming apparatus 100.

In step S101, the image processing unit 3 as the rasterizing unit 101 rasterizes color sample data.

In step S102, the image processing unit 3 as the color converting unit 102 performs color conversion on the rasterized color sample data using color conversion parameters to generate first raster data.

In step S103, the image forming unit 10 forms color sample images on a recording medium P based on the first raster data.

In step S104, the reading unit 2 reads the color sample images from the recording medium P to generate second raster data.

In step S105, the image processing unit 3 as the detecting unit 105 sets zero to counters n, m, p, q. Here, the counter n is a counter that counts the number of color sample images of which the processing is finished. The counter m is a counter that counts the number of sub-regions of which the processing is finished. The counter p is a counter that counts the number of pixels for calculation of the second average value. The counter q is a counter that accumulates gradation values of pixels for calculation of the second average value.

In step S106, the image processing unit 3 as the detecting unit 105 adds 1 to the counter n.

In step S107, the image processing unit 3 as the detecting unit 105 selects a color sample image. The image processing unit 3, for example, firstly selects the leftmost color sample image of the uppermost tier of FIG. 3. Thereafter, the image processing unit 3 selects a neighboring color sample image located on the right side of the color sample image processed right before the selection whenever 1 is added to the counter n. If there is no more neighboring color sample image on the right side, the leftmost color sample image in the downwardly adjacent tier is selected.

In step S108, the image processing unit 3 as the detecting unit 105 adds 1 to the counter m.

In step S109, the image processing unit 3 as the detecting unit 105 selects sub-regions. The image processing unit 3, for example, firstly selects the leftmost sub-region of the uppermost tier of FIG. 4A. Thereafter, the image processing unit 3 selects a neighboring sub-region located on the right side of the sub-region processed right before the selection whenever 1 is added to the counter m. If there is no more neighboring sub-region on the right side, the leftmost sub-region in the downwardly adjacent tier is selected.

In step S110, the image processing unit 3 as the detecting unit 105 calculates the sum of difference absolute values of the first raster data and the second raster data with regard to a selected sub-region of a selected color sample image. If the sum of difference absolute values reaches a threshold, the image processing unit 3 determines that a defect is detected (Yes in step S110) and proceeds to step S112. When the sum of difference absolute values is less than the threshold, the image processing unit 3 determines that no defect is detected (No in step S110) and proceeds to step Sill.

In step Sill, the image processing unit 3 as the correcting unit 106 adds the number of pixels of the sub-region to the counter p and adds gradation values of all the pixels of the sub-region in the second raster data to the counter q, and proceeds to step S112.

In step S112, the image processing unit 3 as the correcting unit 106 determines whether or not processing of step S110 has been completed with respect to all the sub-regions of the color sample image. If the processing has been completed with respect to all the sub-regions (Yes in step S112), the image processing unit 3 proceeds to step S113. When the sub-region of which the processing is not finished remains (No in step S112), the image processing unit 3 returns to step S108.

In step S113, the image processing unit 3 as the correcting unit 106 calculates the second average value by dividing a value of the counter q by a value of the counter p and calculates the first average value from the first raster data. The image processing unit 3 calculates a color conversion parameter which causes the second average value to come close to the first average value and records the calculated color conversion parameter in LUT corresponding to the color and the area rate of the color sample image.

In step S114, the image processing unit 3 as the correcting unit 106 determines whether or not processings from steps S107 to S113 have been completed with respect to all the color sample images. When the processings have been completed (Yes in S114), the image processing unit 3 finishes correction of color conversion parameters and, when the processings have not been completed (No in S114), proceeds to step S115.

In step S115, the image processing unit 3 as the correcting unit 106 sets zero to the counter m and returns to step S106.

### <Modified Example>

The exemplary embodiments may be modified as follows.

### <Modified Example 1>

In the exemplary embodiment, an example in which the correcting unit 106 calculates the second average value from gradation values of all pixels included in the region excluding the region where the defect is detected by the detecting unit 105 is illustrated. However, for example, a band-shaped region having a predetermined width may be set along an edge of a defect region and the second average value may be calculated from a region where the defect region and the band-shaped region are excluded. In addition, the second average value may be calculated from the pixels included in a sub-region where the defect of the second color sample image is detected except for the pixels having different gradation values from that of the first color sample image. In brief, the correcting unit 106 corrects color conversion parameters based on the second raster data corresponding to a region excluding a defect region detected by the detecting unit 105 and the first raster data such that the color of each color sample image formed based on the first raster data by the image forming unit 103 comes close to the color corresponding to the first color sample image of the first raster data.

### <Modified Example 2>

When, in relation to an area of the second color sample image, a ratio of a total area of the regions where the defects are present in the second color sample image of the second raster data reaches a threshold, the correcting unit 106 may not execute correction of color conversion parameters based on the second raster data. This is because, in some cases, a non-uniformity that is not determined as a defect is produced even in a region in which no defect has occurred and the second average value is susceptible to be effected by the non-uniformity as an area required for calculation of the second average value is reduced.

In addition, the correcting unit 106 may notify occurrence of error when, in relation to the area of the second color sample image, the ratio of the total area of the defects present in the second color sample image reaches a threshold.

### <Modified Example 3>

Also, a receiving unit configured to receive designation of a certain region of the second color sample image of the second raster data by the user may be included. The correcting unit 106 excludes the image data of the region which is within the certain region of which the designation is received by the receiving unit.

For example, the receiving unit is a touch-panel of the manipulation unit 1 and the control unit 4 displays the second color sample image on the touch-panel. In the image, the division lines of the above-described sub-regions overlap with the second color sample image and the image is configured such that a region for use in correction of color conversion parameters is designated by the sub-region. The control unit 4 may calculate the second average value from the second raster data corresponding to a region which is within the region designated on the touch-panel by the user and where the sub-region with a defect detected therein is excluded and corrects color conversion parameters based on the first average value and the second average value.

In such a configuration, the correcting unit 106 may not execute correction of color conversion parameters based on the second raster data when, in relation to the area of the certain region designated by the user in the second color sample image in which the defects have been detected by the detecting unit 105, a ratio of the total area of the defects present in the second color sample image reaches a threshold.

### <Modified Example 4>

When a position of a recording medium deviates from an original reading position when the reading unit 2 reads the color sample images formed by the image forming unit 10, for example, movement, rotation, expansion, or reduction of the second color sample images may be caused in relation to the first color sample images. In this case, a difference absolute value of regions where the defects do not occur may exceed a threshold and there is a risk in that it may be erroneously determined that defects have occurred. Therefore, the image processing unit may calculate a movement amount, a rotation amount, an expansion amount, or a reduction amount of the second color sample image in relation to the first color sample image and perform a reverse conversion of the second color sample image to eliminate, for example, movement, rotation, expansion, or reduction.

### <Modified Example 5>

In the case in which color sample data is raster data having a predetermined resolution, processings by the rasterizing unit 101 may be omitted. In addition, in the case in which color sample data is raster data, but has a resolution different from that of the second raster data, the image processing unit 3 may change the resolution of the color sample data to be equal to that of the second raster data, or may generate second raster data having the same resolution as that of the color sample data.

### <Modified Example 6>

In the exemplary embodiment, an example in which a defect is detected based on the first raster data and the second raster data is exemplified. However, when a color sample image based on first raster data is formed plurality of times, a defect may be detected based on the previously generated second raster data and the newest second raster data. For example, when second raster data having no defect detected by the detecting unit of the above-described exemplary embodiment is stored as reference raster data in the storage unit 5 and a new correction of color conversion parameters is executed, a defect may be detected based on the reference raster data read out from the storage unit 5 and newly generated second raster data.

### <Modified Example 7>

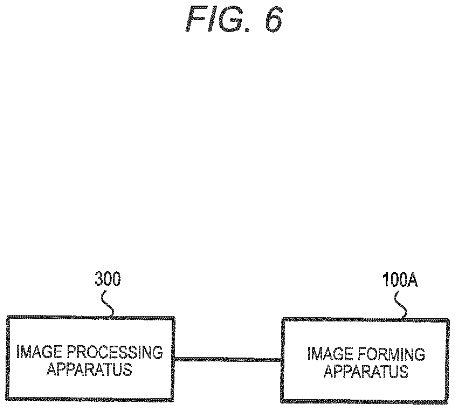

In the exemplary embodiment, an example in which the image processing unit 3 is integrated with the image forming apparatus 100 is illustrated. However, as illustrated in FIG. 6, the image processing unit 3 may be separated from the image forming apparatus 100 to constitute an image processing apparatus 300 and an image forming apparatus 100A which is not provided with the image processing unit 3 and the image processing apparatus 300 may be connected to each other via a communication line. In this case, the reading unit 2 will be a component of the image forming apparatus 100A. That is, the image processing apparatus 300 includes: a color converting unit that generates the first raster data by performing color conversion on color sample data representing color sample images using color conversion parameters; an acquiring unit that acquires the second raster data generated by reading the color sample image formed based on the first raster data by the image forming apparatus; a detecting unit which detects a defect occurring in the color sample image based on the first raster data and the second raster data; and a correcting unit which corrects the color conversion parameters based on the second raster data corresponding to the region excluding a region where the defect is detected by the detecting unit and the first raster data such that the color of each color sample image formed based on the first raster data by the image forming apparatus comes close to the color represented by the first raster data.

### <Modified Example 8>

In the exemplary embodiment, an example in which the image forming unit 10 is an electro-photographic type is illustrated. However, the image forming unit 10 may be any other type, such as, e.g., an inkjet type.

Also, in the exemplary embodiment, an example in which the control unit 4 operates the image forming apparatus 100 by executing a program is illustrated. However, the program may be recorded in a computer readable recording medium such as an optical recording medium and a semiconductor memory such that the control unit reads the program from the recording medium and stores the same in the storage unit 5. Further, the program may be provided through an electric communication link. In addition, the same functions as those described in the exemplary embodiment may be implemented using hardware.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. An image processing apparatus comprising:
a color converting unit (102) that performs color conversion on color sample data which represents color sample images using color conversion parameters to generate first raster data;
an acquiring unit (104) that acquires second raster data generated by reading the color sample images formed based on first color sample images of the first raster data by an image forming apparatus (103);
a detecting unit (105) that detects a defect present in second color sample images of the second raster data; and
a correcting unit (106) that excludes image data of a region where the defect is detected by the detecting unit (105) from the second color sample images, and corrects the color conversion parameters such that a color of each second color sample image formed based on the first raster data by the image forming apparatus (103) comes close to a color corresponding to the first color sample image of the first raster data, based on the second raster data corresponding to a region excluding the region where the defect is detected by the detecting unit, and the first raster data;
wherein the correcting unit (106) does not execute the correction of the color conversion parameters based on the second raster data when, in relation to an area of the second color sample image of the second raster data, a ratio of a total area of the regions where the defects are present in the second color sample image of the second raster data reaches a threshold.

2. The image processing apparatus of claim 1,
wherein the detection of the detecting unit (105) is performed by comparing the first color sample images of the first raster data and the second color sample images of the second raster data.

3. The image processing apparatus of claim 1, further comprising:
a storage unit (5) in which the second raster data acquired by the acquiring unit (104) as reference raster data is stored,
wherein the detection of the detecting unit (105) is performed by comparing color sample images of the reference raster data and the second color sample images of the second raster data which is acquired after the storage of the reference raster data.

4. The image processing apparatus of claim 1 or 2,
wherein the region where the region where the defect is detected by the detecting unit (105) includes a region of the defect and a region adjacent thereto.

5. The image processing apparatus of claim 1,
wherein the correcting unit (106) notifies occurrence of error when the ratio of the total area reaches the threshold.

6. The image processing apparatus of any one of claims 1 to 5, further comprising:
a receiving unit (1) that receives designation of a certain region of the second color sample images of the second raster data by a user,
wherein the correcting unit (106) excludes the image data of the region which is within the certain region of which the designation is received by the receiving unit.

7. An image forming apparatus comprising:
the image forming unit; and
the image processing apparatus of any one of claims 1 to 6.

8. An image processing method comprising:
performing (S102) color conversion on color sample data which represents color sample images using color conversion parameters to generate first raster data;
acquiring (S104) second raster data generated by reading the color sample images formed based on first color sample images of the first raster data by an image forming apparatus (103);
detecting (S110) a defect present in second color sample images of the second raster data; and
excluding image data of a region where the defect is detected from the second color sample images, and correcting (S113) the color conversion parameters such that a color of each second color sample image formed based on the first raster data by the image forming apparatus comes close to a color corresponding to the first color sample image of the first raster data, based on the second raster data corresponding to a region excluding the region where the defect is detected, and the first raster data;
wherein the correction of the color conversion parameters based on the second raster data is not executed when, in relation to an area of the second color sample image of the second raster data, a ratio of a total area of the regions where the defects are present in the second color sample image of the second raster data reaches a threshold.

9. A program causing a computer to execute a process for image processing, the process comprising:
performing (S102) color conversion on color sample data which represents color sample images using color conversion parameters to generate first raster data;
acquiring (S104) second raster data generated by reading the color sample images formed based on first color sample images of the first raster data by an image forming apparatus;
detecting (S110) a defect present in second color sample images of the second raster data; and
excluding image data of a region where the defect is detected from the second color sample images, and correcting (S113) the color conversion parameters such that a color of each second color sample image formed based on the first raster data by the image forming apparatus comes close to a color corresponding to the first color sample image of the first raster data, based on the second raster data corresponding to a region excluding the region where the defect is detected, and the first raster data;
wherein the correction of the color conversion parameters based on the second raster data is not executed when, in relation to an area of the second color sample image of the second raster data, a ratio of a total area of the regions where the defects are present in the second color sample image of the second raster data reaches a threshold.

## Patentansprüche

1. Bildverarbeitungsvorrichtung, umfassend:
eine Farbumwandlungseinheit (102), die eine Farbumwandlung an Farbmusterdaten, die Farbmusterbilder darstellen, unter Verwendung von Farbumwandlungsparametern durchführt, um erste Rasterdaten zu erzeugen;
eine Bezugseinheit (104), die zweite Rasterdaten bezieht, die durch Lesen der Farbmusterbilder erzeugt werden, die auf der Basis von ersten Farbmusterbildern der ersten Rasterdaten durch eine Bilderzeugungsvorrichtung (103) gebildet wurden;
eine Erkennungseinheit (105), die einen Fehler erkennt, der in zweiten Farbmusterbildern der zweiten Rasterdaten vorliegt; und
eine Korrektureinheit (106), die Bilddaten einer Region ausschließt, in der der Fehler von der Erkennungseinheit (105) von den zweiten Farbmusterbildern erkannt wird, und die Farbumwandlungsparameter derart korrigiert, dass eine Farbe jedes zweiten Farbmusterbilds, das auf der Basis der ersten Rasterdaten durch die Bilderzeugungsvorrichtung (103) gebildet wurde, einer Farbe nahe kommt, die dem ersten Farbmusterbild der ersten Rasterdaten entspricht, auf der Basis der zweiten Rasterdaten, die einer Region entsprechen, die die Region ausschließt, in der der Fehler von der Erkennungseinheit erkannt wird, und der ersten Rasterdaten;
wobei die Korrektureinheit (106) die Korrektur der Farbumwandlungsparameter auf der Basis der zweiten Rasterdaten nicht ausführt, wenn in Bezug auf eine Fläche des zweiten Farbmusterbilds der zweiten Rasterdaten ein Verhältnis einer Gesamtfläche der Regionen, in denen die Fehler in dem zweiten Farbmusterbild der zweiten Rasterdaten vorliegen, einen Grenzwert erreicht.

2. Bildverarbeitungsvorrichtung nach Anspruch 1,
wobei die Erkennung der Erkennungseinheit (105) durch Vergleichen der ersten Farbmusterbilder der ersten Rasterdaten und der zweiten Farbmusterbilder der zweiten Rasterdaten durchgeführt wird.

3. Bildverarbeitungsvorrichtung nach Anspruch 1, weiterhin umfassend:
eine Speichereinheit (5), in der die zweiten Rasterdaten, die von der Bezugseinheit (104) bezogen wurden, als Referenzrasterdaten gespeichert werden,
wobei die Erkennung der Erkennungseinheit (105) durch Vergleichen von Farbmusterbildern der Referenzrasterdaten und der zweiten Farbmusterbilder der zweiten Rasterdaten durchgeführt wird, die nach dem Speichern der Referenzrasterdaten bezogen werden.

4. Bildverarbeitungsvorrichtung nach Anspruch 1 oder 2, wobei die Region, in der der Fehler von der Erkennungseinheit (105) erkannt wird, eine Region des Fehlers und eine daran angrenzende Region beinhaltet.

5. Bildverarbeitungsvorrichtung nach Anspruch 1,
wobei die Korrektureinheit (106) ein Fehlerauftreten mitteilt, wenn das Verhältnis der Gesamtfläche den Grenzwert erreicht.

6. Bildverarbeitungsvorrichtung nach einem der Ansprüche 1 bis 5, weiterhin umfassend:
eine Empfangseinheit (1), die eine Bezeichnung einer bestimmten Region der zweiten Farbmusterbilder der zweiten Rasterdaten durch einen Benutzer empfängt,
wobei die Korrektureinheit (106) die Bilddaten der Region ausschließt, die innerhalb der bestimmten Region liegt, von der die Bezeichnung durch die Empfangseinheit empfangen wird.

7. Bilderzeugungsvorrichtung, umfassend:
die Bilderzeugungseinheit und
die Bildverarbeitungsvorrichtung nach einem der Ansprüche 1 bis 6.

8. Bildverarbeitungsverfahren, umfassend:
Durchführen (S102) einer Farbumwandlung an Farbmusterdaten, die Farbmusterbilder darstellen, unter Verwendung von Farbumwandlungsparametern, um erste Rasterdaten zu erzeugen;
Beziehen (S104) von zweiten Rasterdaten, die durch Lesen der Farbmusterbilder erzeugt werden, die auf der Basis von ersten Farbmusterbildern der ersten Rasterdaten durch eine Bilderzeugungsvorrichtung (103) gebildet wurden;
Erkennen (S110) eines Fehlers, der in zweiten Farbmusterbildern der zweiten Rasterdaten vorliegt; und
Ausschließen von Bilddaten einer Region, in der der Fehler von den zweiten Farbmusterbildern erkannt wird, und Korrigieren (S113) der Farbumwandlungsparameter derart, dass eine Farbe jedes zweiten Farbmusterbilds, das auf der Basis der ersten Rasterdaten durch die Bilderzeugungsvorrichtung gebildet wurde, einer Farbe nahe kommt, die dem ersten Farbmusterbild der ersten Rasterdaten entspricht, auf der Basis der zweiten Rasterdaten, die einer Region entsprechen, die die Region ausschließt, in der der Fehler erkannt wird, und der ersten Rasterdaten;
wobei die Korrektur der Farbumwandlungsparameter auf der Basis der zweiten Rasterdaten nicht ausgeführt wird, wenn in Bezug auf eine Fläche des zweiten Farbmusterbilds der zweiten Rasterdaten ein Verhältnis einer Gesamtfläche der Regionen, in denen die Fehler in dem zweiten Farbmusterbild der zweiten Rasterdaten vorliegen, einen Grenzwert erreicht.

9. Programm, das bewirkt, dass ein Computer einen Vorgang zur Bildverarbeitung ausführt, wobei der Vorgang Folgendes umfasst:
Durchführen (S102) einer Farbumwandlung an Farbmusterdaten, die Farbmusterbilder darstellen, unter Verwendung von Farbumwandlungsparametern, um erste Rasterdaten zu erzeugen;
Beziehen (S104) von zweiten Rasterdaten, die durch Lesen der Farbmusterbilder erzeugt werden, die auf der Basis von ersten Farbmusterbildern der ersten Rasterdaten durch eine Bilderzeugungsvorrichtung gebildet wurden;
Erkennen (S110) eines Fehlers, der in zweiten Farbmusterbildern der zweiten Rasterdaten vorliegt; und
Ausschließen von Bilddaten einer Region, in der der Fehler von den zweiten Farbmusterbildern erkannt wird, und Korrigieren (S113) der Farbumwandlungsparameter derart, dass eine Farbe jedes zweiten Farbmusterbilds, das auf der Basis der ersten Rasterdaten durch die Bilderzeugungsvorrichtung gebildet wurde, einer Farbe nahe kommt, die dem ersten Farbmusterbild der ersten Rasterdaten entspricht, auf der Basis der zweiten Rasterdaten, die einer Region entsprechen, die die Region ausschließt, in der der Fehler erkannt wird, und der ersten Rasterdaten;
wobei die Korrektur der Farbumwandlungsparameter auf der Basis der zweiten Rasterdaten nicht ausgeführt wird, wenn in Bezug auf eine Fläche des zweiten Farbmusterbilds der zweiten Rasterdaten ein Verhältnis einer Gesamtfläche der Regionen, in denen die Fehler in dem zweiten Farbmusterbild der zweiten Rasterdaten vorliegen, einen Grenzwert erreicht.

## Revendications

1. Appareil de traitement d'image comprenant :
une unité de conversion de couleurs (102) qui effectue une conversion de couleurs sur des données d'échantillon de couleurs qui représentent des images d'échantillon de couleurs en utilisant des paramètres de conversion de couleurs pour générer des premières données de trame ;
une unité d'acquisition (104) qui acquiert des secondes données de trame générées en lisant les images d'échantillon de couleurs formées sur la base des premières images d'échantillon de couleurs des premières données de trame par un appareil de formation d'image (103) ;
une unité de détection (105) qui détecte un défaut présent dans les secondes images d'échantillon de couleurs des secondes données de trame ; et
une unité de correction (106) qui exclut des données d'image d'une région où le défaut est détecté par l'unité de détection (105) à partir des secondes images d'échantillon de couleurs, et corrige les paramètres de conversion de couleurs de sorte qu'une couleur de chaque seconde image d'échantillon de couleurs formée sur la base des premières données de trame par l'appareil de formation d'image (103) devient proche d'une couleur correspondant à la première image d'échantillon de couleurs des premières données de trame, sur la base des secondes données de trame correspondant à une région excluant la région où le défaut est détecté par l'unité de détection, et des premières données de trame ;
dans lequel l'unité de correction (106) n'effectue pas la correction des paramètres de conversion de couleurs sur la base des secondes données de trame lorsque, par rapport à une zone de la seconde image d'échantillon de couleurs des secondes données de trame, un rapport d'une surface totale des régions où les défauts sont présents dans la seconde image d'échantillon de couleurs des secondes données de trame atteint un seuil.

2. Appareil de traitement d'image selon la revendication 1,
dans lequel la détection de l'unité de détection (105) est effectuée en comparant les premières images d'échantillon de couleurs des premières données de trame et les secondes images d'échantillon de couleurs des secondes données de trame.

3. Appareil de traitement d'image selon la revendication 1, comprenant en outre :
une unité de stockage (5) dans laquelle les secondes données de trame acquises par l'unité d'acquisition (104) en tant que données de trame de référence sont stockées,
dans lequel la détection de l'unité de détection (105) est effectuée en comparant des images d'échantillon de couleurs des données de trame de référence et les secondes images d'échantillon de couleurs des secondes données de trame qui sont acquises après le stockage des données de trame de référence.

4. Appareil de traitement d'image selon la revendication 1 ou 2,
dans lequel la région où le défaut est détecté par l'unité de détection (105) comprend une région du défaut et une région adjacente à celle-ci.

5. Appareil de traitement d'image selon la revendication 1,
dans lequel l'unité de correction (106) notifie l'apparition d'une erreur lorsque le rapport de la surface totale atteint le seuil.

6. Appareil de traitement d'image selon l'une quelconque des revendications 1 à 5, comprenant en outre :
une unité de réception (1) qui reçoit une désignation d'une certaine région des secondes images d'échantillon de couleurs des secondes données de trame par un utilisateur,
dans lequel l'unité de correction (106) exclut les données d'image de la région qui se trouve dans la certaine région dont la désignation est reçue par l'unité de réception.

7. Appareil de formation d'image comprenant :
l'unité de formation d'image ; et
l'appareil de traitement d'image selon l'une quelconque des revendications 1 à 6.

8. Procédé de traitement d'image comprenant les étapes consistant à :
effectuer (S102) une conversion de couleurs sur des données d'échantillon de couleurs qui représentent des images d'échantillon de couleurs en utilisant des paramètres de conversion de couleurs pour générer des premières données de trame ;
acquérir (S104) des secondes données de trame générées en lisant les images d'échantillon de couleurs formées sur la base des premières images d'échantillon de couleurs des premières données de trame par un appareil de formation d'image (103) ;
détecter (S110) un défaut présent dans des secondes images d'échantillon de couleurs des secondes données de trame ; et
exclure des données d'image d'une région où le défaut est détecté à partir des secondes images d'échantillon de couleurs, et corriger (S113) les paramètres de conversion de couleurs de sorte qu'une couleur de chaque seconde image d'échantillon de couleurs formée sur la base des premières données de trame par l'appareil de formation d'image devient proche d'une couleur correspondant à la première image d'échantillon de couleurs des premières données de trame, sur la base des secondes données de trame correspondant à une région excluant la région où le défaut est détecté, et des premières données de trame ;
dans lequel la correction des paramètres de conversion de couleurs sur la base des secondes données de trame n'est pas exécutée lorsque, par rapport à une zone de la seconde image d'échantillon de couleurs des secondes données de trame, un rapport d'une surface totale des régions où les défauts sont présents dans la seconde image d'échantillon de couleurs des secondes données de trame atteint un seuil.

9. Programme amenant un ordinateur à exécuter un processus de traitement d'image, le processus comprenant les étapes consistant à :
effectuer (S102) une conversion de couleurs sur des données d'échantillon de couleurs qui représentent des images d'échantillon de couleurs en utilisant des paramètres de conversion de couleurs pour générer des premières données de trame ;
acquérir (S104) des secondes données de trame générées en lisant les images d'échantillon de couleurs formées sur la base des premières images d'échantillon de couleurs des premières données de trame par un appareil de formation d'image (103) ;
détecter (S110) un défaut présent dans des secondes images d'échantillon de couleurs des secondes données de trame ; et
exclure des données d'image d'une région où le défaut est détecté à partir des secondes images d'échantillon de couleurs, et corriger (S113) les paramètres de conversion de couleurs de sorte qu'une couleur de chaque seconde image d'échantillon de couleurs formée sur la base des premières données de trame par l'appareil de formation d'image devient proche d'une couleur correspondant à la première image d'échantillon de couleurs des premières données de trame, sur la base des secondes données de trame correspondant à une région excluant la région où le défaut est détecté, et des premières données de trame ;
dans lequel la correction des paramètres de conversion de couleurs sur la base des secondes données de trame n'est pas exécutée lorsque, par rapport à une zone de la seconde image d'échantillon de couleurs des secondes données de trame, un rapport d'une surface totale des régions où les défauts sont présents dans la seconde image d'échantillon de couleurs des secondes données de trame atteint un seuil.
